# EUROPEAN PATENT SPECIFICATION

(11) **EP 2 908 102 B1**
(45) Date of publication and mention of the grant of the patent: **27.03.2019**
(21) Application number: 14360003.9
(22) Date of filing: 12.02.2014
(51) Int. Cl.: G01D 21/00

(54) **Modular sensor system, method, sensor module and computer program product**
Modulares Sensorsystem, Verfahren, Sensormodul und Computerprogrammprodukt
Système modulaire de capteurs, procédé, module capteur et produit de programme informatique

(43) Date of publication of application: 19.08.2015
(73) Proprietor: Alcatel Lucent, 91620 Nozay (FR)
(72) Inventor: Leddy, Alan, Dublin (IE); Boran, Aidan, Dublin (IE)
(74) Representative: Nokia EPO representatives

(56) References cited:
- EP-A1- 2 044 890
- US-A1- 2008 004 726
- US-A1- 2011 021 930

## Description

### TECHNICAL FIELD

The present invention relates generally to sensor systems, and more specifically although not exclusively to a modular sensor system.

### BACKGROUND

Machine to machine sensor networks, such as indoor sensor networks for example, are typically bespoke industrial applications requiring expert users to design, configure and manage them. This complexity restricts the ability of domestic and service providers to introduce and manage sensor networks, devices and services. It has also limited the rapid absorption of sensor networks and associated applications in the domestic and building management domains.

Construction and configuration of multifunctional flexible controller and gateway platforms for sensing applications is a complex task normally requiring expert technicians focused on a bespoke and predetermined implementation. There are multitudes of particular sensors, various processing and storage options, numerous application and data visualisation features and a wide range of communication protocols available; each chosen in a non-versatile manner to meet a particular and bespoke sensing implementation. There is the added complexity of dealing with the proliferation of new and heterogeneous network data models and protocols. Overall these sensing solutions tend to be static, expensive, time consuming and are brittle approaches for the deployment of sensor networks.

US2011/021930A1 describes a support device and sensor system. US 2008/004726A1 describes a connector module for connection of a sensor, such as an optoelectronic sensor.

### SUMMARY

According to an example, there is provided a modular sensor system as provided in claim 1. The colour sensor can be operable to generate an RGB code representing the colour of the colour coded portion. A power and communication interface of a receiving portion can include an electrical connection disposed on the receiving portion and arranged to engage with a corresponding electrical connection of a modular sensor to be received thereon. The sensor gateway can be operable to process data received from the communications module and transmit the processed data to a remote device using a network connection of the gateway. Respective receiving portions of the sensor interface can include a protrusion or depression or cutout to engage with a corresponding portion of a modular sensor whereby to enable a deployed senor to be resiliently biased in position.

According to an example, there is provided a method as provided in claim 6. An RGB code representing the colour of the colour coded portion can be generated. The method can further comprise processing data received at the sensor gateway from the communications module and transmitting the processed data from the sensor gateway to a remote device using a network connection of the gateway. Receiving one or more modular sensors can include aligning an electrical connection disposed on the receiving portion and arranged to engage with a corresponding electrical connection of a modular sensor with a corresponding electrical connection of the modular sensor, whereby to enable the sensor to be powered and enable data communication between the sensor and the system. The RGB code of a modular sensor can be used to identify the function of the sensor; and configuring a deployed sensor on the basis of data relating to the RGB coding of the sensor.

According to an example, there is provided a sensor module as provided in claim 11.

According to an example, there is provided a method a computer program product, comprising a computer usable medium having computer readable program code embodied therein, said computer readable program code adapted to be executed to implement a method as described herein.

### BRIEF DESCRIPTION OF THE DRAWINGS

Embodiments will now be described, by way of example only, with reference to the accompanying drawings, in which:
Figure 1 is a schematic representation of a modular sensor platform according to an example;
Figure 2 is a schematic representation of a modular sensor system according to an example;
Figure 3 is a schematic representation of a sensor module according to an example;
Figure 4 is a schematic representation of a sensor module according to an example;
Figure 5 is a schematic representation of multiple sensor modules and a platform according to an example;
Figure 6 is a schematic representation of a sensing module according to an example;
Figure 7 is a schematic representation of a modular sensor platform according to an example;
Figure 8 is a schematic representation of a sensor identification process according to an example;
Figure 9 is a schematic representation of a protocol to exchange sensor configuration and measurement data according to an example; and
Figure 10 is a schematic representation of system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, there is provided a modular sensor system that includes modular sensor elements that are prepackaged into physical, stackable and inter-connectable stackable packages providing functionality, commonality and physical rigidity to the system. A sensor interface including multiple receiving portions is arranged on a surface thereof to receive one or more of the modular sensors. The sensors can be selected from a plurality of heterogeneous sensors with different functionality and operable to generate data representing the state of one or more measurands. The respective receiving portions of the interface include common power and communications interfaces, and the system includes a communications module to transmit data generated by a sensor to a remote gateway device as will be described in greater detail below.

A system as described herein permits a non-expert user to construct or assemble a multitude of sensors, processing and storage functionalities, power and energy storage and communications protocols in a flexible modular manner to meet the demands of each and every desired sensing scenario. This allows the user to select and combine any type of sensor with processing and storage functionality as well as communications protocols by plugging or connecting together the physical modules for those specific capabilities, from a range of compatible sensors and support functions.

According to an example, a variable, generally rectangular shaped modular system is provided which delivers a solution for easily installing, adding, upgrading, modifying and the removal of sensors, power sources, batteries, communications and data storage functions as well as overall micro-control of the system. Such a flexible modular approach greatly extends the lifespan of the solution as individual components or modules can be replaced or upgraded if and whenever necessary by the user as the system grows and evolves over time.

Individual sensors and other modules can be manufactured in a hard plastic and/or can include: PVC type casing for example, which can be designed to allow for rigid mechanical and flexible assembly with a connection mechanism for power and communications purposes on each module, which can be a standard connection mechanism. Groups of sensor nodes can be added together to achieve additional functionality or to share resources such as communications, battery or power. The size and form factor can be relatively small and unobtrusive, but it can also be scaled into a large format if needed. Elements are prepackaged into a physical stackable and inter-connectable stackable package to provide physical rigidity for the system.

Modules are self-contained in terms of functionality and have common external communications and power interfaces to the other modules. Modules can be configured in a variety of formats as the end user desires.

A modular architecture according to an example includes:
- A pre-defined processing capability including a microcontroller prepackaged into a physical stackable and interconnectable module with common power and communications interfaces;
- A pre-defined data storage module with common power and communications interfaces.
- A pre-defined communication module such as an RF transceiver prepackaged into a physical stackable and interconnectable stackable package with common power and communications interfaces;
- A power source, connected or connectable using a physical connection such as micro-USB or similar for example;
- A sensor interface board with associated connectors prepackaged into a physical stackable and interconnectable stackable module with common power and communications interfaces;
- Multiple sensors designed for simple addition and removal with a minimal separate configuration process for registration and integration and prepackaged into physical stackable and interconnectable stackable modules with common power and communications interfaces, such as a plurality of heterogeneous sensors operable to generate data representing the state of one or more measurands.

Accordingly, a user can decide which functionality is needed for each sensing scenario, and is able to plug or click those functional modules together with partner modules and to deploy that sensor network platform and gateway without any interventions necessary.

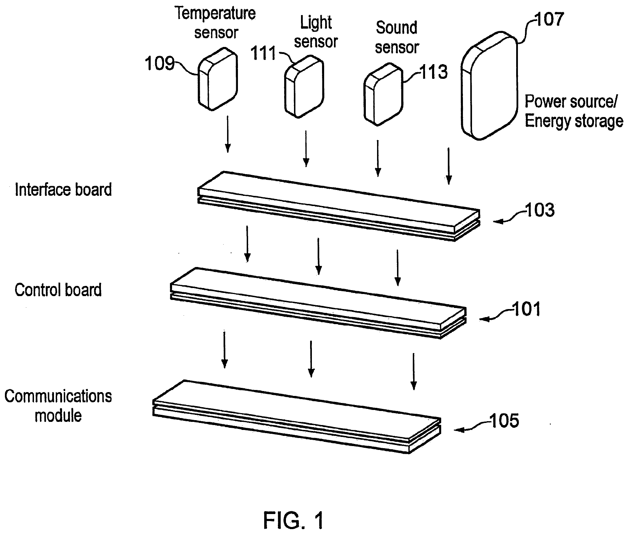

Figure 1 is a schematic representation of a modular sensor platform according to an example. The example shown in figure 1 consists of a number of modules:
- A microcontroller module 101;
- A sensor interface board 103 with associated connectors (not shown) capable of receiving a multitude of sensors;
- A data storage module (not shown);
- A communications module 105 which can be wired (such as Ethernet for example) or wireless (such as RF transceiver for example) module;
- A power source or an energy storage module 107, such as a battery.
- A plurality of I sensors with specialised/specific functionality, for example temperature 109, humidity, light 111, IR, and sound 113 sensors.

For each deployed node, a user can select a range of required sensors such as temperature, light, presence, humidity and sound. Each of these sensors is prebuilt/made arid, in an example, encapsulated in a rigid plastic or hard PVC type enclosure with interface and power connections. The user can select a particular control board and communications interface. They then plug each particular sensor into that control board and turn it on. Thereafter each node is operable to configure itself with its associated specific sensors and the network of nodes configures itself. A platform therefore includes multiple functional elements for a sensor system according to an example, such an interface to receive sensors, a controller, a communications module and so on.

A process to configure a sensor network according to an example includes the following steps:
1. User selects what sensors they want on each sensor node;
2. User plugs each sensor onto the interface board for that node;
3. Node is turned on and self configures with all attached sensors;
4. Network of nodes self configures;
5. User accesses and uses each node and data source (sensor) in an application or set of applications.

The user can decide to remove or replace a particular sensor and so can remove that sensor, and a node can accept a new or modified sensor and reconfigure itself accordingly.

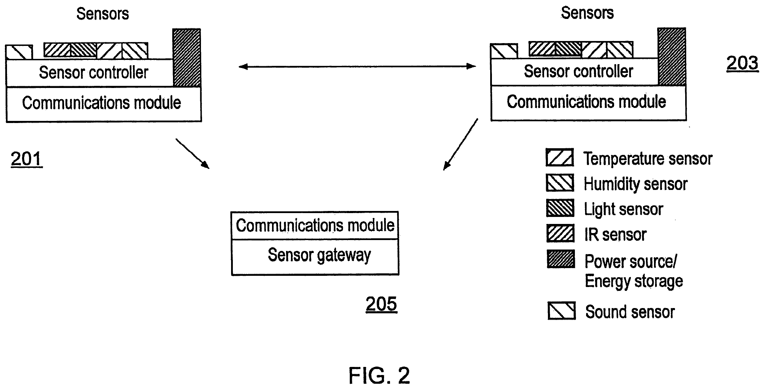

Figure 2 is a schematic representation of a modular sensor system according to an example. In the example of figure 2, two sensing platforms 201, 203 are depicted in communication with a sensor gateway 205. As noted by the provision of the line between the platforms 201 and 203, the platforms can be communicatively coupled to one another as well as to the sensor gateway 205, by means of the communications module of respective ones; of the platforms and gateway 205. Platforms 201, 203 can be communicatively coupled using a wired or wireless link for example.

According to an example, a sensor gateway 205 can be a remote (from the platforms 201, 203) device operable to receive data that has been collected by the platforms, either in a raw format or after some pre-processing has been applied before transmission to the gateway for example. The gateway 205 can form part of a remote server for example or can be operable to send date to a remote server using a network, such as the internet for example. In the case that a gateway acts as an intermediary between a sensing platform and a remote device or application, such as a cloud-based application or storage service for example, data sent by the gateway can be sent in the format in which it was received or can be processed. For example, the gateway can process data received from a sensor platform in order to provide specific sensing data relating to one or more of the sensors that have been deployed on an interface of a sensing system. For example, raw data received at the gateway from a platform which has a temperature sensor deployed thereon can be processed in order to generate temperature data representing temperature measurements at certain times or within certain time periods for example.

According to an example, a modular sensor for use as part of the system can be in the form of a rigid 'pod' or device which can be plugged, unplugged and so on onto receiving/interface boards. The electrical connections for each sensor (power and data) can be pre-coated and placed on the side wall of each pod in advance. When performing the sensor pod insertion a directional polarity guide cutout or extrusion on the sensor (such as on the front or back) and corresponding to similar elements on the receiving platform can ensure correct orientation of each sensor. Therefore all the non-expert user needs to do is to plug the required sensor (light, heat, humidity, sound etc) on to the receiver board as required.

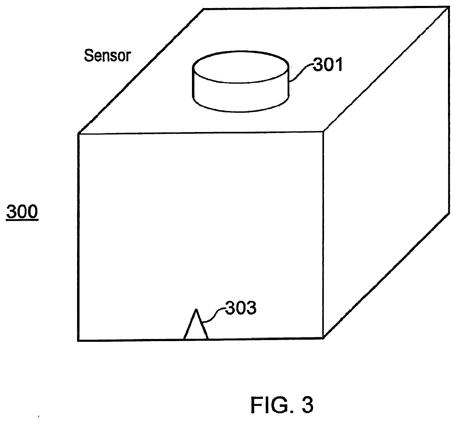

Figure 3 is a schematic representation of a sensor module according to an example. A sensor insertion point 301 can be in the form of a window of functional gap for example, in order to enable reception of a sensor device, such as a temperature or light sensor for example, or to allow light and so on to pass through in order to be received at a sensor located within the body of the sensor 300. A sensor insertion element 303 can be provided in the form of, for example, a guide cutout of extrusion to enable directional polarity for module insertion to be catered for.

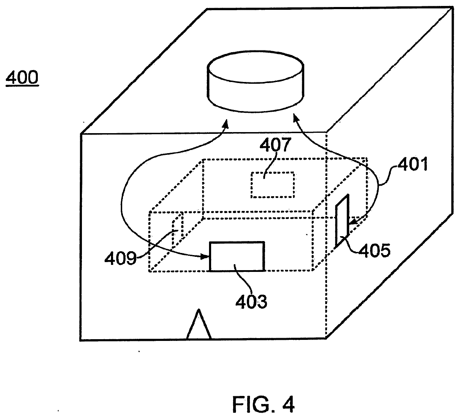

Figure 4 is a schematic representation of a sensor module according to an example. A hollow internal section 401 is provided, each side of which can include an electrical connection 403, 405, 407, 409. The electrical connection can be provided as a result of the deposition of conductive material at points of the internal section 401. The connections enable the module 400 to be powered and enable data signaling to and from the module and the sensing system.

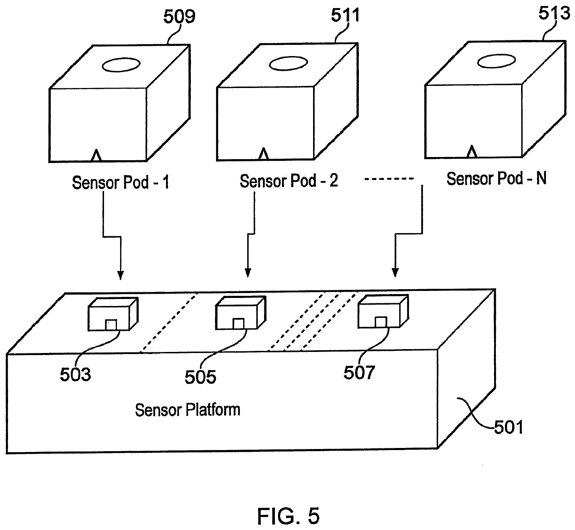

Figure 5 is a schematic representation of multiple sensor modules and a platform according to an example. As can be seen in figure 5, platform 501 can include multiple connection points for modules. More specifically, an interface portion of the platform 501 can include multiple connection points for nodes. The connection points 503, 505, 507 can be in the form of extrusions to the platform or interface module which include dedicated electrical connection material deposited on each side and which are connected a microprocessor within the sensing platform. Modules 509, 511, 513 can be connected to the points 503, 505, 507 in any position desired.

As noted, electrical connections can therefore be pre-soldered or connected onto at least two sides (power and ground) of the four or more inner electrically conductive surfaces within the internal section of a module. In an example, a sensor module is a lightweight cubed or cuboid shaped rigid plastic (or other such suitable material) moulded structure. Each module can include a small slot or opening 301 on the topmost face sufficient to allow a sensor component to be inserted securely and to perform its requisite sensing function. A small sealing gasket of soft plastic or rubber may also be used in order to seal the opening. The inside of the pod can be hollow to form an internal section 401, which can be a cuboid shaped internal region for example. The module has an electrically conductive material deposited or attached to at least two of the four or more inside surfaces of this section and a directional polarity guide cutout or extrusion 303 can be provided to enable correct connection of the module to a platform.

A sensor module receiver/platform according to an example is a structure with a receiving surface consisting of a linear multitude of either square or rectangular or similar connection positions or extrusions, such as of height 1-2mm and with each extrusion of width being less than the internal width of the cube or cuboid modules to be seated thereabove. Each receiving platform connection position can include electrically conductive points (such as four for example) aligned to the electrically conductive surfaces of the internal section of a module. A corresponding directional polarity guide cutout or extrusion to engage with a cutout/extrusion of a module can be provided. The electrically conductive points are connected to an internal communications and power bus system within the sensor module or platform for connecting to a microprocessor unit. There is no maximum as to the number of sensing pod positions. Accordingly, modules deployed onto a receiving surface at connection positions engage with the positions in order to complete electrical connections that can be used to power the module and send/receive data to and from the module.

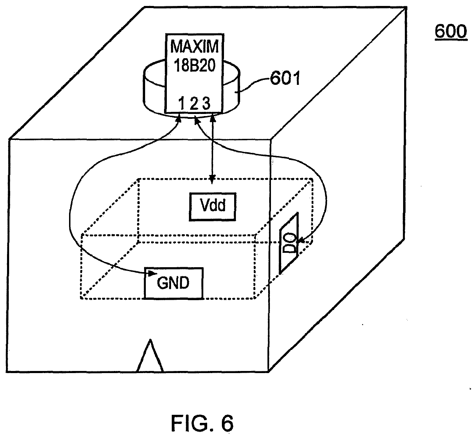

Figure 6 is a schematic representation of a sensing module according to an example. Figure 6 schematically depicts how a digital temperature sensor can be packaged in a module according to an example. For the sensor, the pins 1 and 3 are connected together and a 4.7kOhm resistor for example is connected to the DQ pin. The associated circuitry for this sensor is housed in the hollowed out section 601 of the pod. Ground (GND) and supply voltage (Vdd) terminals of the module 600 are connected to pins 1 and 3, and in use these terminals are in electrical connection with corresponding ground and power supply terminals of a receiving portion of a platform or interface module.

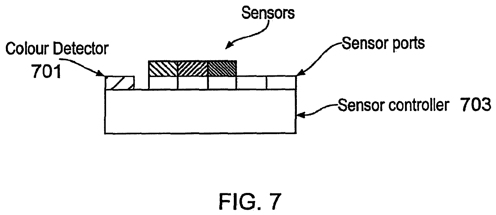

According to an example, a mechanism to automatically identify and configure a sensor module to a sensor controller interface is provided allowing end users to setup and configure sensors without any prior knowledge of the data or electrical characteristics of the sensor. Figure 7 is a schematic representation of a modular sensor system according to an example. The identification and configuration of sensors can be effected in an example using colour coding of sensors or portions thereof with associated detection of colour at the sensor platform. A colour sensor or detector 701 is a hardware component on the sensor controller 703 capable of scanning and encoding colour. This type of component is typically called an RGB or colour sensor. Colour sensors typically detect the colour of an object in close promixity (5-10mm) and return an RBG code (three integers). Pods or sensing modules are colour coded. The RBG spectrum provides a huge address space to encode different types of sensors. Only part of the sensor packing needs to be colour coded in advance at sensor manufacturing or perhaps by addition of a coloured sticker or mark or similar, although the entire module can be so colour coded if desired.

An RGB code processing component (not shown) executing on the sensor controller 703 which collects/detects the RGB code and uses that code to determine the identification (type) of sensor is provided, and a sensor type register in the form of, for example, a table which allows conversion of RBG codes to sensor type identification can be used to map an RGB colour coding to a module identify to determine the type and functionality of a module that has been deployed.

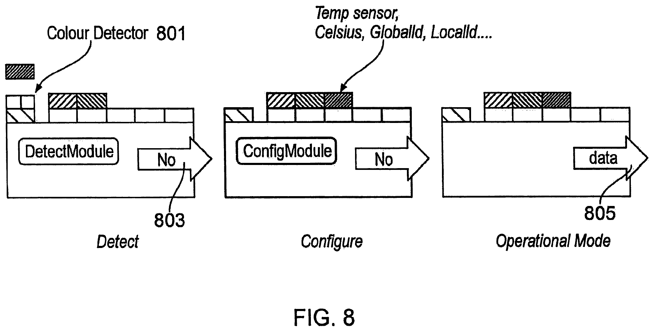

Figure 8 is a schematic representation of a sensor identification process according to an example. To add a new sensor to the sensor network system, the user places - one at a time - each new sensor within a defined distance (up to 10mm) of a colour sensor 801 on the sensor controller. The controller detects that an object has been placed in front of it, collects the colour sensor reading and converts it to RBG code. The RGB code 803 collected in the detect stage is passed to the sensor controller to perform a lookup process for the new sensor. This can be implemented as a lookup table using the RBG code as the index for example. The table can be stored locally on the controller or remotely on the sensor gateway (or the gateway can collect the information from a cloud or back end service for example). To identify and use a sensor, a number of data items are identified (discovered) before it can be added to the network:
- local unique sensor id (e.g. 1234)
- referencible global descriptor (e.g. provides more detail about the sensor)
- sensor type (e.g. temperature sensor)
- measurement interval and degree of precision (e.g. minute)
- measurement data type (e.g. integer)
- measurement data unit (e.g. C or F)
- sensor revision data

The sensor controller can then transmit the data 805 over the appropriate communications channel.

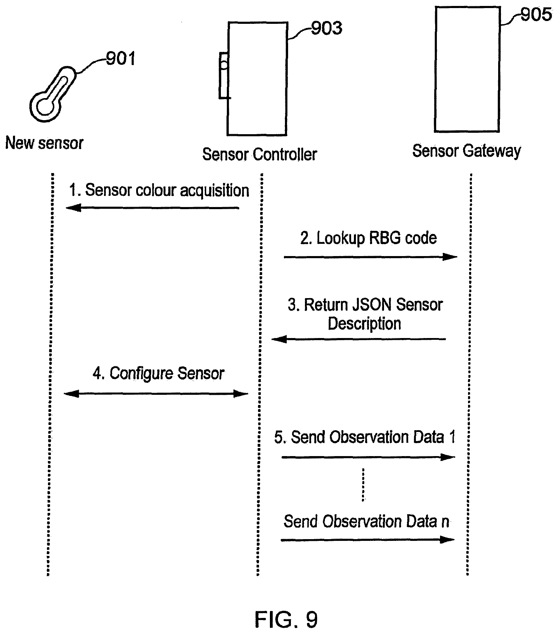

Figure 9 is a schematic representation of a protocol to exchange sensor configuration and measurement data according to an example. At 1 a user positions the sensor 901 close to the sensor controller 903 colour detector. Once the sensor colour is detected, the sensor controller 903 generates an RGB code for the sensor 901. At 2-3, the sensor controller 903 broadcasts a LOOKUP message to the sensor gateway 905 with the RBG code. The gateway 905 checks its hash table for this RBG code and formats a JSON string as shown below with the sensor description:

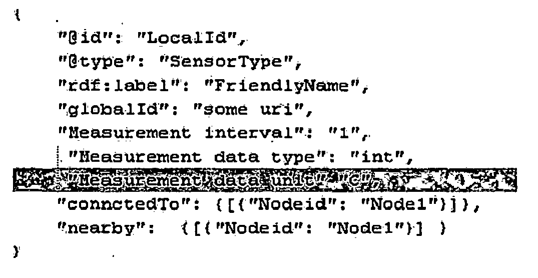

At 4-5, the sensor controller 903 configures the sensor 901 based on the measurement and connectivity data it has received and begins sending sensor data observations.

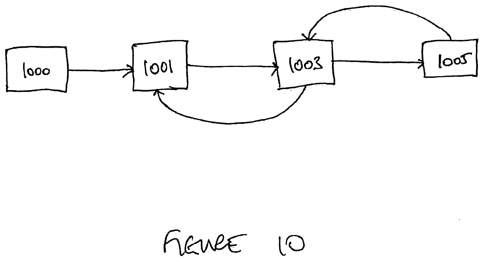

Figure 10 is a schematic representation of system according to an example. More specifically, figure 10 depicts a process for obtaining the specification of a sensor that has been deployed on a sensor platform using a sensor gateway that is in communication with sensor data services. A sensor 1000 is deployed onto a sensor interface 1001 as described above. For example, a user inserts, plugs or otherwise attaches sensor 1000 to interface 1001. The sensor 1000 is powered by virtue of electrical connection with the interface element 1001 as described above. Data from or relating to sensor 1000 can be read by the platform. For example, as described above, sensor 1000 can include colour coding to enable the platform to determine a sensor type and other related data for the sensor that may be encoded for the sensor by the colour coding. Alternatively, or in addition, a control element (such as 101 in figure 1) can read information from any newly deployed sensor or can periodically check if a sensor has been or is deployed at a receiving portion. For example, a reserved memory region of (newly or existing) deployed sensor can be read, which memory portion can include data representing the sensor type for example.

Data for the sensor 1000, as determined by the colour encoding for the sensor, can be sent using communications module 105 for example, to sensing or sensor gateway 1003. The gateway 1003 can include data for sensors, and can map the colour coding provided to a list of sensors in order to determine and provide information relating to the sensor to the platform. For example, gateway 1003 can include a table that maps a colour coding to a sensor data, which sensor data can include, for example sensor type, a measurement interval and degree of precision (e.g. minute), measurement data type (e.g. integer), measurement data unit (e.g. C or F) and sensor revision data and so on, as described above. If s deployed sensor cannot be identified from the colour coding provided, gateway 1003 can communicate with a remote sensor data service 1005, which can be provided as a cloud based service for example, and which can include information relating to every possible sensor that can be deployed for the system, or can query a separate resource or can be updated by a administrator for example to include data relating to sensors. Once a sensor has been identified using the colour coding, data can be sent back to the gateway 1003, which can be relayed to the platform in question.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope. Certain aspects are described herein with reference to indoor systems, however it will be appreciated that the same is equally applicable to system that can be deployed or used outside, or both inside (a building/room etc.) and outside of a building.

## Claims

1. A modular sensor system, comprising:
a sensor interface (103) including multiple receiving portions arranged on a surface thereof to receive one or more modular sensors (109; 111; 113; 107) selected from a plurality of heterogeneous sensors having respective functionalities and operable to generate data representing a state of one or more measurands, respective receiving portions including common power and communications interfaces, the sensor interface comprising a colour sensor (701) adapted to detect a colour coded portion of a modular sensor to be deployed thereon whereby to identify the respective functionality of a sensor from said one or more modular sensors for an initial configuration when said modular sensor is received; and
a communications module (105) to transmit data generated by one or more modular sensors (109; 111; 113; 107) to a remote sensor gateway device (205).

2. A modular sensor system as claimed in claim 1, wherein the colour sensor (701) is operable to generate an RGB code representing the colour of the colour coded portion.

3. A modular sensor system as claimed in any preceding claim, wherein a power and communication interface of a receiving portion includes an electrical connection disposed on the receiving portion and arranged to engage with a corresponding electrical connection of a modular sensor (109; 111; 113; 107) to be received thereon.

4. A modular sensor system as claimed in any preceding claim, further comprising the sensor gateway, wherein the sensor gateway is operable to process data received from the communications module and transmit the processed data to a further remote device using a network connection of the sensor gateway.

5. A modular sensor system as claimed in any preceding claim, wherein respective receiving portions of the sensor interface include a protrusion or depression or cutout to engage with a corresponding portion of a modular sensor whereby to enable a deployed senor to be resiliently biased in position.

6. A method, comprising:
receiving one or more modular sensors selected from a plurality of heterogeneous sensors (109; 111; 113; 107) having respective functionalities and operable to generate data representing a state of one or more measurands on respective receiving portions arranged on a surface of a sensor interface of a modular sensor system, respective receiving portions including common power and communications interfaces;
transmitting data generated by a received sensor to a remote sensor gateway device using a communications module; and
detecting a colour coded portion of a modular sensor received on a receiving portion using a colour sensor on the sensor interface; and
identifying the respective functionality of a sensor from said one or more modular sensors for an initial configuration when said modular sensor is received.

7. A method as claimed in claim 6, further comprising generating an RGB code representing the colour of the colour coded portion.

8. A method as claimed in claim 6 or 7, further comprising processing data received at the sensor gateway from the communications module and transmitting the processed data from the sensor gateway to a further remote device using a network connection of the gateway.

9. A method as claimed in any of claims 6 to 8, wherein receiving one or more modular sensors includes aligning an electrical connection disposed on the receiving portion and arranged to engage with a corresponding electrical connection of a modular sensor with a corresponding electrical connection of the modular sensor, whereby to enable the sensor to be powered and enable data communication between the sensor and the system.

10. A method as claimed in claim 7, wherein the RGB code of a modular sensor is used to identify the function of the sensor; and configuring a deployed sensor on the basis of data relating to the RGB coding of the sensor.

11. A sensor module (300; 400; 600) for use in a system as claimed in any of claims 1 to 5, including:
a receiving portion (301; 601) to receive sensing means;
an internal portion (401) including multiple electrical connections (403; 405; 407; 409) for common power and communications interfaces and for engaging with a corresponding receiving portion (503; 505 507) of an interface of the system; and
a colour coded portion operable to be detected by a colour sensor of the system when the sensor module is deployed whereby to identify the sensor module for the system.

12. A computer program product, comprising a computer usable medium having computer readable program code embodied therein, said computer readable program code adapted to be executed to implement a method as claimed in any of claims 6 to 10.

## Patentansprüche

1. Modulares Sensorsystem, das Folgendes umfasst:
eine Sensorschnittstelle (103), die mehrere auf einer Oberfläche davon angeordnete Empfangsteile zum Empfangen eines oder mehrerer modularer Sensoren (109; 111; 113; 107) beinhaltet, die aus mehreren heterogenen Sensoren ausgewählt sind, die jeweilige Funktionalitäten aufweisen und zum Erzeugen von Daten funktionsfähig sind, die einen Zustand einer oder mehrerer Messgrößen repräsentieren, wobei jeweilige Empfangsteile gemeinsame Leistungs- und Kommunikationsschnittstellen beinhalten, wobei die Sensorschnittstelle einen Farbsensor (701) umfasst, der zum Detektieren eines farbcodierten Teils eines modularen Sensors, der darauf zu installieren ist, eingerichtet ist, wodurch die jeweilige Funktionalität eines Sensors von dem einen oder den mehreren modularen Sensoren für eine anfängliche Konfiguration identifiziert wird, wenn der modulare Sensor empfangen wird; und
ein Kommunikationsmodul (105) zum Übertragen von Daten, die durch einen oder mehrere modulare Sensoren (109; 111; 113; 107) erzeugt werden, an eine ferne Sensor-Gateway-Vorrichtung (205).

2. Modulares Sensorsystem nach Anspruch 1, wobei der Farbsensor (701) zum Erzeugen eines RGB-Codes funktionsfähig ist, der die Farbe des farbcodierten Teils repräsentiert.

3. Modulares Sensorsystem nach einem vorhergehenden Anspruch, wobei eine Leistungs- und Kommunikationsschnittstelle eines Empfangsteils eine elektrische Verbindung beinhaltet, die auf dem Empfangsteil angeordnet ist und zum Eingriff mit einer entsprechenden elektrischen Verbindung eines darauf zu empfangenden modularen Sensors (109; 111; 113; 107) eingerichtet ist.

4. Modulares Sensorsystem nach einem vorhergehenden Anspruch, das ferner den Sensor-Gateway umfasst, wobei der Sensor-Gateway zum Verarbeiten von Daten, die von dem Kommunikationsmodul empfangen werden, und Übertragen der verarbeiteten Daten an eine weitere ferne Vorrichtung unter Verwendung einer Netzverbindung des Sensor-Gateways funktionsfähig ist.

5. Modulares Sensorsystem nach einem vorhergehenden Anspruch, wobei jeweilige Empfangsteile der Sensorschnittstelle eine Ausbuchtung oder Vertiefung oder einen Ausschnitt zum Eingriff mit einem entsprechenden Teil eines modularen Sensors beinhalten, wodurch ermöglicht wird, dass ein installierter Sensor elastisch in seiner Position vorgespannt wird.

6. Verfahren, das Folgendes umfasst:
Empfangen eines oder mehrerer modularer Sensoren, die aus mehreren heterogenen Sensoren (109; 111; 113; 107) ausgewählt sind, die jeweilige Funktionalitäten aufweisen und zum Erzeugen von Daten funktionsfähig sind, die einen Zustand einer oder mehrerer Messgrößen auf jeweiligen Empfangsteilen, die auf einer Oberfläche einer Sensorschnittstelle eines modularen Sensorsystems angeordnet sind, repräsentieren, wobei jeweilige Empfangsteile gemeinsame Leistungs- und Kommunikationsschnittstellen beinhalten;
Übertragen von Daten, die durch einen empfangenen Sensor erzeugt werden, an eine ferne Sensor-Gateway-Vorrichtung unter Verwendung eines Kommunikationsmoduls; und
Detektieren eines farbcodierten Teils eines modularen Sensors, der auf einem Empfangsteil empfangen wird, unter Verwendung eines Farbsensors der Sensorschnittstelle; und
Identifizieren der jeweiligen Funktionalität eines Sensors von dem einen oder den mehreren modularen Sensoren für eine anfängliche Konfiguration, wenn der modulare Sensor empfangen wird.

7. Verfahren nach Anspruch 6, das ferner Erzeugen eines RGB-Codes umfasst, der die Farbe des farbcodierten Teils repräsentiert.

8. Verfahren nach Anspruch 6 oder 7, das ferner Verarbeiten von Daten, die von dem Kommunikationsmodul an dem Sensor-Gateway empfangen werden, und Übertragen der verarbeiteten Daten von dem Sensor-Gateway an eine weitere ferne Vorrichtung unter Verwendung einer Netzverbindung des Gateways umfasst.

9. Verfahren nach einem der Ansprüche 6 bis 8, wobei das Empfangen eines oder mehrerer modularer Sensoren Ausrichten einer elektrischen Verbindung, die auf dem Empfangsteil angeordnet ist und zum Eingriff mit einer entsprechenden elektrischen Verbindung eines modularen Sensors eingerichtet ist, mit einer entsprechenden elektrischen Verbindung des modularen Sensors, umfasst, wodurch ermöglicht wird, dass der Sensor mit Leistung versorgt wird, und eine Datenkommunikation zwischen dem Sensor und dem System ermöglicht wird.

10. Verfahren nach Anspruch 7, wobei der RGB-Code eines modularen Sensors verwendet wird, um die Funktion des Sensors zu identifizieren; und Konfigurieren eines installierten Sensors basierend auf Daten bezüglich der RGB-Codierung des Sensors.

11. Sensormodul (300; 400; 600) zur Verwendung in einem System nach einem der Ansprüche 1 bis 5, das Folgendes beinhaltet:
einen Empfangsteil (301; 601) zum Empfangen von Erfassungsmitteln;
einen internen Teil (401), der mehrere elektrische Verbindungen (403; 405; 407; 409) für gemeinsame Leistungs- und Kommunikationsschnittstellen und zum Eingriff mit einem entsprechenden Empfangsteil (503; 505; 507) einer Schnittstelle des Systems beinhaltet; und
einen farbcodierten Teil, der dazu funktionsfähig ist, durch einen Farbsensor des Systems detektiert zu werden, wenn das Sensormodul installiert wird, wodurch das Sensormodul für das System identifiziert wird.

12. Computerprogrammprodukt, das ein computernutzbares Medium mit einem darin umgesetzten computerlesbaren Programmcode umfasst, wobei der computerlesbare Programmcode dazu eingerichtet ist, ausgeführt zu werden, um ein Verfahren nach einem der Ansprüche 6 bis 10 zu implementieren.

## Revendications

1. Système de capteur modulaire comprenant :
une interface de capteur (103) comprenant de multiples parties de réception agencées sur l'une surface de ses surfaces pour recevoir un ou plusieurs capteurs modulaires (109 ; 111 ; 113 ; 107) sélectionnés parmi une pluralité de capteurs hétérogènes ayant des fonctionnalités respectives et permettant de générer des données représentant un état d'un ou de plusieurs mesurandes, des parties de réception respectives comprenant des interfaces de puissance et de communication communes, l'interface de capteur comprenant un capteur de couleur (701) conçu pour détecter une partie chromocodée d'un capteur modulaire qui doit être déployé sur cette dernière, ce qui permet d'identifier la fonctionnalité respective d'un capteur parmi ledit ou lesdits capteurs modulaires pour une configuration initiale lorsque ledit capteur modulaire est reçu ; et
un module de communication (105) destiné à transmettre des données générées par un ou plusieurs capteurs modulaires (109; 111; 113; 107) à un dispositif de passerelle de capteur distant (205).

2. Système de capteur modulaire selon la revendication 1, dans lequel le capteur de couleur (701) permet de générer un code RVB représentant la couleur de la partie chromocodée.

3. Système de capteur modulaire selon l'une quelconque des revendications précédentes, dans lequel une interface de puissance et de communication d'une partie de réception comprend une connexion diélectrique disposée sur la partie de réception et conçue pour venir en prise avec une connexion électrique correspondante d'un capteur modulaire (109 ; 111 ; 113 ; 107) qui doit être reçu sur cette dernière.

4. Système de capteur modulaire selon l'une quelconque des revendications précédentes, comprenant en outre la passerelle de capteur, dans lequel la passerelle de capteur permet de traiter des données reçues du module de communication et de transmettre les données traitées à un autre dispositif distant à l'aide d'une connexion réseau de la passerelle de capteur.

5. Système de capteur modulaire selon l'une quelconque des revendications précédentes, dans lequel des parties de réception respectives de l'interface de capteur comprennent une saillie ou un creux ou une découpe pour venir en prise avec une partie correspondante d'un capteur modulaire, ce qui permet de solliciter élastiquement en position un capteur déployé.

6. Procédé comprenant :
la réception d'un ou de plusieurs capteurs modulaires sélectionnés parmi une pluralité de capteurs hétérogènes (109; 111; 113; 107) ayant des fonctionnalités respectives et permettant de générer des données représentant un état d'un ou de plusieurs mesurandes sur des parties de réception respectives agencées sur une surface d'une interface de capteur d'un système de capteur modulaire, des parties de réception respectives comprenant des interfaces de puissance et de communication communes ;
la transmission de données générées par un capteur reçu à un dispositif de passerelle de capteur distant à l'aide d'un module de communication ; et
la détection d'une partie chromocodée d'un capteur modulaire reçu sur une partie de réception à l'aide d'un capteur de couleur sur l'interface de capteur ; et
l'identification de la fonctionnalité respective d'un capteur parmi ledit ou lesdits capteurs modulaires pour une configuration initiale lorsque ledit capteur modulaire est reçu.

7. Procédé selon la revendication 6, comprenant en outre la génération d'un code RVB représentant la couleur de la partie chromocodée.

8. Procédé selon la revendication 6 ou 7, comprenant en outre la traitement de données reçues au niveau de la passerelle de capteur en provenance du module de communication et la transmission des données traitées depuis la passerelle de capteur à un autre dispositif distant à l'aide d'une connexion réseau de la passerelle.

9. Procédé selon l'une quelconque des revendications 6 à 8, dans lequel la réception d'un ou de plusieurs capteurs modulaires comprend l'alignement d'une connexion électrique disposée sur la partie de réception et conçue pour venir en prise avec une connexion électrique correspondante d'un capteur modulaire avec une connexion électrique correspondante du capteur modulaire, ce qui permet d'alimenter le capteur et permet une communication de données entre le capteur et le système.

10. Procédé selon la revendication 7, dans lequel le code RVB d'un capteur modulaire est utilisé pour identifier la fonction du capteur ; et la configuration d'un capteur déployé sur la base de données se rapportant au codage RVB du capteur.

11. Module de capteur (300 ; 400 ; 600) destiné à être utilisé selon l'une quelconque des revendications 1 à 5, comprenant :
une partie de réception (301; 601) destinée à recevoir des moyens de réception ;
une partie interne (401) comprenant de multiples connexions électriques (403 ; 405 ; 407 ; 409) pour des interfaces de puissance et de communication et pour venir en prise avec une partie de réception correspondante (503 ; 505 ; 507) d'une interface du système ; et
une partie chromocodée permettant d'être détectée par un capteur de couleur du système lorsque le module de capteur est déployé, ce qui permet d'identifier le module de capteur pour le système.

12. Produit-programme d'ordinateur, comprenant un support pouvant être utilisé par un ordinateur dans lequel est intégré un code de programme lisible par ordinateur, ledit code de programme lisible par ordinateur étant conçu pour être exécuté pour mettre en oeuvre un procédé selon l'une quelconque des revendications 6 à 10.
